# EUROPEAN PATENT APPLICATION

(11) **EP 4 410 419 A1**
(43) Date of publication of application: **07.08.2024**
(21) Application number: 23305140.8
(22) Date of filing: 02.02.2023
(51) Int. Cl.: B01J 20/22, B01J 20/28, B01J 20/30, B01J 20/32, B01D 53/26, B01D 53/28

(54) **METAL ORGANIC FRAMEWORKS POLYMORPHISM FOR ADSORPTION PROFILE TUNING**

(71) Applicant: Centre National de la Recherche Scientifique, 75016 Paris (FR); Ecole Supérieure de Physique et de Chimie Industrielles de la Ville de Paris, 75005 Paris (FR); Ecole Normale Supérieure, 75005 Paris (FR); Heinrich Heine Universität Düsseldorf, 40225 Düsseldorf (DE)
(72) Inventor: SERRE, Christian, 78730 PLAISIR (FR); MOUCHAHAM, Georges, 37000 TOURS (FR); NOUAR, Farid, 78180 MONTIGNY-LE-BRETONNEUX (FR); MATEMB MA NTEP, Tobie, 40225 DÜSSELDORF (DE); JANIAK, Christoph, 40593 DÜSSELDORF (DE)
(74) Representative: Brevalex

(57) **Abstract**

The present invention relates, inter alia, to metal organic frameworks (MOF) material, and more precisely to the use of porous crystalline solids constituted of MOF for the adsorption of gases or vapors and thermally driven water-sorption-based cooling systems, such as water harvesting or production, gas and/or vapor capture and separation, such as CO₂, hydrocarbons, BTX and VOCs, catalysis, sensing.

The new MOF material of the present invention can present an enhanced sorption profile.

## Description

### Field of the invention

The present invention relates, inter alia, to metal organic frameworks (MOF) material, and more precisely to the use of porous crystalline solids constituted of a metal-organic framework (MOF) for the adsorption of gases or vapors and thermally driven water-sorption-based cooling systems, such as water harvesting or production, gas and/or vapor capture and separation, such as CO₂, hydrocarbons, BTX (benzene, toluene, xylenes) and VOCs (volatile organic compounds), catalysis, sensing.

The new MOF material of the present invention can present an enhanced sorption profile.

The references in square brackets **[X]** refer to the list of references at the end of the examples.

### Background of the invention

The development of many sustainable technologies involving the adsorption of water vapor strongly relies on the discovery of high-performing porous materials. Such technologies include adsorption-driven heat transformation (AHT) and atmospheric water harvesting (AWH).**[1,2]** In water-based adsorption-driven heat exchangers, that is adsorption-driven chillers (ADCs) and adsorption heat pumps (AHPs), heating or cooling, e.g., for air conditioning, are achieved by reversible multicycling adsorption-desorption of water vapor into/from a porous adsorbent. The regeneration of the material at each cycle could be realized by applying a (lower temperature compared to the adsorption temperature) renewable energy, such as solar or waste heat.**[3,4]** ADCs and AHPs are regarded as a clean and sustainable alternative to compressor-based conventional chillers and heat pumps, on account of their potential to minimize primary electrical energy consumption and greenhouse gas emissions generated by industrial or domestic cooling.**[5]** On the other hand, AWH enables to capture water vapor directly from thin air by porous materials during relatively high humidity times, e.g., at night, and to release the trapped water upon solar heating during daytime.**[6,7**] AWH represents, therefore, an attractive means for the delivery of drinking/fresh water in remote and arid areas.**[8]** For both technologies, the applied porous material should, among other criteria, adsorb water vapor at low relative humidity (5% ≤ RH ≤ 40%) and release it with a minimal energy penalty. To meet a good performance/efficiency of the device, water adsorption onto the porous material should also occur within a very narrow relative pressure window, which is translated by a single-step sigmoidal (S-shaped) water isotherm, as well as a high uptake capacity should be reached within the pressure window of interest.**[9,10]**

Among several types of porous adsorbents that have already been investigated for both AHT and AWH, metal-organic frameworks (MOFs) are appealing materials.**[11,12]** This is due to the wide range of possibilities that this materials class can offer in terms of tuning their water sorption profile, as well as large water uptake capacities attainable due to their high porosity.**[13,14,15]** MOFs consist of inorganic building units (IBUs; i.e., clusters, chains or layers) that are interconnected by polydendate organic linkers to form a micro- or meso- porous coordination network.**[16,17,18]** Unlike more traditional porous materials like zeolites and activated carbons, the combination of several parameters such as ligands or clusters functionalization, framework topology, pore geometries and size, the presence of structural defects etc., allow modulating the water sorption profile of MOFs in a unique manner.**[19,20]** Several of these strategies to design MOFs for water-based applications have been implemented in order to increase their hydrophilicity (or hydrophobicity), their water uptake capacity, their hydrothermal stability or to yield a water isotherm with a steep sigmoidal shape.**[21,22]** Regarding tuning the pore size and/or shape of MOFs, polymorphism could be a new approach to modulate the water sorption properties of a MOF while maintaining its building blocks. Polymorphism means the occurrence of a compound in diverse crystalline structures possessing the same chemical composition (stoichiometry such as metal/ligand), but differ in the spatial arrangement of the atoms which leads to variation in physicochemical properties. MOF polymorphs are also referred to as framework isomers.**[23,24]** The significance of polymorphism of MOFs has been recognized, since one topological isomer can exhibit different or enhanced properties compared to the other.**[25,26,27]** For instance, two polymorphs of MOF TII(TCNQ) (TCNQ = 7,7,8,8-tetracyanoquinodimethane), which crystallize in the space groups *P*21/*c* and *P*2/*c*, respectively, displayed dramatically different conductivity properties.**[28]** The nbo topology of Cu₂(1,4-benzenedicarboxylate) was reported to feature a remarkably high affinity for linear alkanes due to its small pores, unlike its polymorphs with rhr and lvt topologies, respectively.**[29]** However, this approach has not yet been addressed, to the best of our knowledge, for improving MOFs for vapor adsorption and related applications.

MOFs, particularly those constructed from high valence metal ions (M^{a+}, a ≥ 3), have shown high promises in many applications related to gas and vapor adsorption such as water adsorption. Among these MOFs, Aluminum-based MOFs (Al-MOFs) are particularly attractive for cycling water-adsorption applications on account of their hydrothermal and chemical stabilities, as well as their light specific weight, the non-toxicity and low-cost of aluminum.**[30,31]** Many structurally similar Al-MOFs which are built from chains of µ-OH and carboxylate bridged {AlOe} octahedra shared vertices through the µ-OH bridge and have been well studied for their potential in AHT and AWH applications, including MIL-53-Fum,**[32,33]** CAU-10H,**[34,35,36]** MIL-53-TDC,**[37]** CAU-23,**[38]** MOF-303,**[39]** MIL-160,**[40,41,42]**, KMF-1,**[43]** and CAU-10pydc.**[44]** Interestingly, these MOFs share the same general unit formula ([Al(OH)(L)]; where L= dicarboxylate linker) but can differ in the shape of the Al-(OH) chain, and the corresponding geometrical features (such as the pores shape and dimension).**[45]** In general, using ditopic linear linkers yields Al-MOF structures with chains of trans-p-OH-connected (or trans-connected) corner-sharing AlO₄(OH)₂ octahedra (e.g., MIL-53 topology),**[46,47]** while using "V-shaped" linkers yields Al-MOFs with helical chains of cis-µ-OHconnected (or cis-connected) corner-sharing AlO₄(OH)₂ octahedra (e.g., CAU-10 topology).**[48,49]** Exceptions to this general observation are V-shaped 1H-pyrazole-3,5-dicarboxylate and 2,4- furandicarboxylate that yield chains of alternate cis-connected and trans-connected cornersharing AlO₄(OH)₂ octahedra in MOF-303 and MOF-333, respectively.**[50]** Likewise, V-shaped 2,5-thiophenedicarboxylate yields polymorphs of either rod-like chains in MIL-53-TDC or chains of mixed cis/trans corner-sharing AlO₄(OH)₂ octahedra in CAU-23.**[38]** The trend which emerges from previously reported works on Al-MOFs, shows that dicarboxylates with opening angle, defined by the axes of C-C bonds of the carboxylate groups, whose values are strictly over 150-158° yield chains of trans-connected corner-sharing AlO₄(OH)₂ octahedra, while those strictly below 150° yield chains of cis-connected corner-sharing AlO₄(OH)₂ octahedra. An opening angle of about 150-158° seems to be an inflection point, and therefore results in Al-MOFs either with chains of mixed cis/trans-connected corner sharing AlO₄(OH)₂ octahedra (CAU-23) or chains of alternate cis-connected and trans-connected corner-sharing AlO₄(OH)₂ octahedra (MOF-303, MOF-333 and MIL-53-TDC, respectively).**[51]**

Until now, to the best of our knowledge, appart from linear dicarboxylate linkers containing triple bonds **[52]**, no aliphatic dicarboxylate-based linker has yet been reported to yield a MOF containing helical M-OH (or M-O) chain clusters, M being for example Al, Fe, Cr, Sc, V, Ga, In or Ti.

Yet, just as with V-shaped linkers, polymorphism through rod-like or helical chains is conceivable also with aliphatic linkers in Al-MOFs. This offers a new opportunity to tune the pore shape and framework topology of already established M-MOFs, M being for example Al, Fe, Cr, Sc, V, Ga, In or Ti.

In this regard, the use of aliphatic ligands (i.e., with aliphatic core, saturated or not, substituted or not by small substituents, interrupted or not by a small aryl group,) could be a rational strategy.

In the case of the zigzag-spaced, pseudo-linear trans,trans-muconate linker (from trans,trans-1,3-butadiene-1,4-dicarboxylate = muc²⁻), some of us recently obtained, using this linker, a new Al-MOF, MIL-53-muc,**[53]** showing MIL-53's topology similarly to the aluminum fumarate MOF (MIL-53-Fum),**[54]** where its framework is made up of rod-like chains of trans-µ₂-OH-corner-sharing AlO₄(OH)₂ octahedra. This was expected since muconate can be regarded as a twofold extension of the fumarate linker. The water sorption profile of MIL-53-muc displays an S-shaped isotherm like MIL-53-Fum, but with a higher uptake capacity and the step position shifted to higher relative pressures (P/P₀ = 0.5-0.6), compared with that of MIL-53-Fum whose step is found at a relative pressure of P/P₀ = 0.2-0.3.**[53]** This is in line with an increase in hydrophobic behavior, rationally attributed to the extension of the hydrophobic organic chain in the muconate linker and lower confinement effect due to larger channels. Hence, the resultant water sorption profile of MIL-53-muc renders this MOF unsuitable, among other applications, for AHT applications when paired with water as cooling fluid, since the step position of the isotherm is located beyond P/P₀ = 0.4.

There is therefore still a need to provide new MOFs which addresses the need for the enhancement of gases or vapors sorption properties of MOFs, especially in the field of adsorption of adsorption of gases or vapors and thermally driven water-sorption-based cooling systems, such as water harvesting or production, gas and/or vapor capture and separation, such as CO₂, hydrocarbons, BTX and VOCs, catalysis, sensing, all in pure phase or doped/partially substituted with metals or ligands to fine tune their sorption properties.

### Description of the present invention

To address this need, extensive research has been conducted by the present inventors in order to find specific synthesis conditions that are capable to very efficiently and selectively lead to helical chain of *cis*-µ₂-OH-connected corner-sharing MO₄(OH)₂ octahedra, when M^{a+} a = 3+, or MO₄(O)₂ *cis*-µ₂-O bridging mode, when M^{a+} a ≥ 4+, resulting in drastic increase of the hydrophilicity compared to that of the known MOF with the trans-µ-OH-connectivity.

The cis-µ-OH-connectivity proved to have an increase of the hydrophilicity compared to that of the MOF with the trans-µ-OH-connectivity, due to higher interaction and confinement originated from the ease of water molecule to preferable bridge between two neighboring µ-OH groups of the IBU, which is more improbable for trans-connected µ-OH groups.

The new polymorphism, therefore, induces a strong change in the hydrophilicity of MOFs and the relative pressure position of the step of water sorption isotherm. This is due to change in accessibility of the OH (or O) sites of the inorganic chains. In the case of the newly made hydrothermally stable MOFs according to the invention, and in particular MIP-211, their water sorption profile and uptake capacity surpass most of the benchmark materials investigated for water sorption applications while exhibiting a low regeneration temperature. The new MOFs are also useful in various applications such as those relying on gas and/or vapor adsorption including capture and separation of gases (CO₂, Hydrogen...), hydrocarbons, BTX and VOCs in general, catalysis, sensing.

Before addressing the description of the invention itself, in order to facilitate an understanding of the present invention, a number of terms and phrases are defined here:
- As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise". As used herein and in the claims "another" may mean at least a second or more. As used herein and in the claims, "about" refers to any inherent measurement error or a rounding of digits for a value (e.g., a measured value, calculated value such as a ratio), and thus the term "about" may be used with any value and/or range.
- The phrase "a combination thereof" "a mixture thereof" and such like following a listing, the use of "and/or" as part of a listing, a listing in a table, the use of "etc" as part of a listing, the phrase "such as," and/or a listing within brackets with "e.g.," or i.e., refers to any combination (e.g., any subset) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."
- In general, the term "substituted" whether preceded by the term "optionally" or not, and substituents contained in formulae of this invention, refer to the replacement of hydrogen radicals in a given structure with the radical of a specified substituent. When more than one position in any given structure may be substituted with more than one substituent selected from a specified group, the substituent may be either the same or different at every position. As used herein, the term "substituted" is contemplated to include all permissible substituents of organic compounds.

- As used herein, the term "about" can refer to a variation of ±5%, ±10%,±20%, or ±25%, of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., concentration values, proximate to the recited range that are equivalent in terms of the functionality of the individual ingredient, the composition, or the embodiment.
- As used herein, the term "and/or" means any one of the items, any combination of the items, or all of the items with which this term is associated.
- As will be understood by the skilled artisan, all numbers, including those expressing quantities of ingredients, properties such as cavity/pore size and BET specific surface area, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.
- As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.
- One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.
- As used herein, the expression "three-dimensional structure" is understood to mean a three-dimensional sequence or repetition of units or subvariants, as is conventionally understood in the field of MOF materials, that are also characterized as "organometallic polymers".
- As used herein, the term "solid" refers to any type of crystalline material. Said solid may be, for example, in the form of crystals, powder or particles of varied forms, for example of spherical, lamellar, etc. form. The particles may be in the form of nanoparticles.
- As used herein, "humid environment" means an atmosphere environment comprising water vapor. It can be the air with water vapor. The amount of water vapor present in the environment, e.g. air, increases as the temperature increases. The differences in the amount of water vapor in a parcel of air can be quite large. For example, a parcel of air that is near saturation (e.g. ≈ 100 % relative humidity) may contain 28 grams of water per cubic meter of air at 30 °C, but only 8 grams of water per cubic meter of air at 8 °C. Water vapor or vapour or aqueous vapor is the gaseous phase of water. It is one state of water within the hydrosphere. Under typical atmospheric conditions, water vapor is continuously generated by evaporation and removed by condensation. The vapor content of air may be measured with devices known as hygrometers. In the present invention, the amount of water vapor in the environment, e.g. air, may be from above dry air to saturation, for example from 10 to 30 °C, for example at room temperature, i.e. at a temperature between 18 °C and 28 °C.
- MOFs are constructed from bridging organic ligands, also named "linkers" or "linker" or "spacers" or "spacer" that remain intact throughout the synthesis, these ligands acting as linkers in the network of the obtained MOF structure. As used herein, the term "ligand" or "linker" or "spacer" refers to a ligand coordinated to at least two metals, which participates in providing distance between these metals and in forming empty spaces or pores, named also "core" in the MOF.
- As used herein, "aliphatic" refers to acyclic or cyclic, saturated or unsaturated carbon compounds, excluding aromatic compounds (IUPAC). Open-chain compounds, whether straight or branched, and which contain no rings of any type, are always aliphatic. Cyclic compounds can be aliphatic if they are not aromatic. Usually, aliphatic compounds can be saturated, joined by single bonds (alkanes), or unsaturated, with double bonds (alkenes) or triple bonds (alkynes). As disclosed herein, unsaturated may preferably be understood as double bonds (alkenes) only. In a preferred embodiment of the invention, the dicarboxylate linkers do not contain triple bonds (alkynes). Besides hydrogen, other elements can be bound to the carbon chain, the most common being oxygen, nitrogen, sulfur, and chlorine.
- As used herein, "aromatic" refers to cyclically conjugated molecular entity with a stability (due to delocalization) significantly greater than that of a hypothetical localized structure (e.g., Kekul6 structure) that is said to possess aromatic character. Use of the term is based on application of the Hückel (4n + 2) rule and on consideration of the topology of orbital overlap in the transition states (IUPAC). It is meant by "aryl", a group derived from arenes by removal of a hydrogen atom from a ring carbon atom; arenes being monoyclic and polycyclic aromatic hydrocarbons (IUPAC). According to the invention aryl groups may be from 5 to 6 membrered rings, preferably 6. It is meant by "heteroaryl", a group derived from heteroarenes by removal of a hydrogen atom from any ring atom; an alternative term is hetaryl (IUPAC). According to the invention heteroaryl groups may be from 5 to 6 membrered rings, preferably 6.

The present inventors have shown through the present invention, that it is possible to strongly enhance water sorption properties of MOFs.

In particular, the present invention relates to a porous Metal-Organic Framework material built up from metal octahedra linked thoughout µ₂-OP and/or µ₂-O bridges and interconnected by organic dicarboxylate linkers, wherein,
- the metallic centres are chosen from Al, Fe, Cr, Sc, V, Ga, In, Ti and mixtures thereof,
- the organic dicarboxylate linkers are chosen from dicarboxylate aliphatic linkers formed by a C₄ to C₁₂, saturated or unstaturated, linear hydrocarbon chain, optionally interrupted by a 5 or 6-membered aryl or heteroaryl moiety, and optionally bearing one or more substituents selected from a halo group, -OH, -NH₂, a C₁ to C₃ alkyl, a C₁ to C₃ alkoxy, -CF₃, -SH, - COOH and -CHR-NH₂ in which R is a C₁ to C₃ alkyl, and
- the metallic centres and the carboxylate groups of the organic dicarboxylate linkers form together a helical chain of *cis*-µ₂-OH-connected corner-sharing MO₄(OH)₂ (when M^{a+} a = 3+) octahedra or MO₄(O)₂ (when M^{a+} a ≥ 4+) *cis-*µ₂-O bridging mode.

It is meant by "helical chain of *cis*-µ₂-OH-connected corner-sharing MO₄(OH)₂ (when M^{a+} a = 3+) octahedra or MO₄(O)₂ (when M^{a+} a ≥ 4+) *cis*-µ₂-O bridging mode", the inorganic bulding unit in the overall structure of the porous solid MOF (or porous MOF). In the previous definition, cis and *trans* have their common meaning in the field. "cis" indicates that the neighbouring groups (-OH or O-lonepaire) are on the same side of a plane or pointing towards close directions (dihedral angle < 180°), while *"trans"* conveys that they are on opposing (transverse) sides, or pointing towards opposite directions.

Advantageously, according to the present invention, the porous MOF metallic centers M may be chosen from Al, Fe, Cr, Sc, V, Ga, In, Ti and mixtures thereof. M may be alternatively chosen from Al, Fe, Cr, Sc, V, Ga, Ti and mixtures thereof. Preferably, M is chosen from Fe, Al and mixtures thereof.

Advantageously, according to the present invention, the porous MOF may have a specific surface area of more than 50 m²/g, preferably more than 100 m²/g. The specific surface area being may be evaluated with the BET model from a N₂ isotherm at 77K of the said MOF material.

Advantageously, according to the present invention, the porous MOF has an average pore size of at least 0.5 nm. The average pore size may be measured with the use of the crystallographic information file (CIF) of the said MOF. It may also be calculated from a nitrogen isotherm upon application of mathematical equations such as for instance a BJH (Barret-Joyner-Halenda), a DFT (Density Functional Theory), a Horvath-Hawazoe or a Dubinin-Astakhov method in which an average pore size distribution can be determined.

Advantageously, the organic dicarboxylate linkers may be chosen from the linkers of formula I: 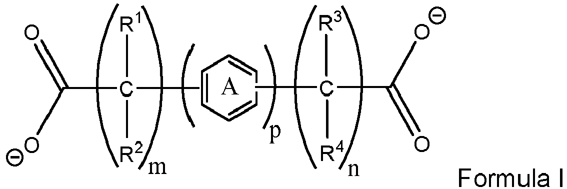 wherein,
- m is an integer from 1 to 5,
- n is an integer from 1 to 5,
- p is 0 or 1, 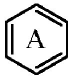 represents a 5 or 6-membered aryl or heteroaryl moiety,
- R¹, R², R³ and R⁴, each independently represents H, a halo group (e.g. F, Br, Cl or I), -OH, -NH₂, a C₁ to C₃ alkyl (e.g., methyl or ethyl), a C₁ to C₃ alkoxy (e.g., methoxy or ethoxy), -CF₃, -SH, -COOH or -CHR-NH₂ in which R is a C₁ to C₃ alkyl, or represent a bond when two adjacent carbon atoms are linked by a double C=C bond (*e.g.*, when the dicarboxylate linker is mucconate, m = n = 2, p = 0 and R¹, R², R³ and R⁴ either represent H or are bonds involved in the C=C bonds).

As meant herein, the organic dicarboxylate linkers, are aliphatic because their structure is based on a C₄ to C₁₂, saturated or unstaturated, linear hydrocarbon chain. As defined above, the linear hydrocarbon chain may be interrupted by a 5 or 6-membered aryl or heteroaryl moiety, such as in the following examples:

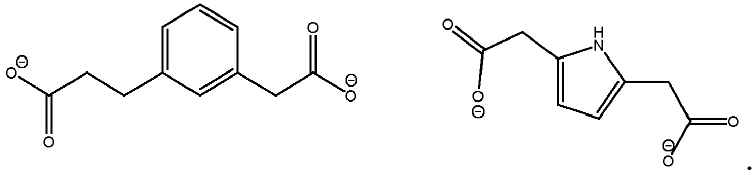

The C₄ to C₁₂ , saturated or unstaturated, linear hydrocarbon chain may optionally bear one or more substituents selected from a halo group, -OH, -NH₂, a C₁ to C₃ alkyl, a C₁ to C₃ alkoxy, -CF₃, -SH, -COOH, -CHR-NH₂ in which R is a C₁ to C₃ alkyl or comprise double C=C bonds, such as in the following examples:

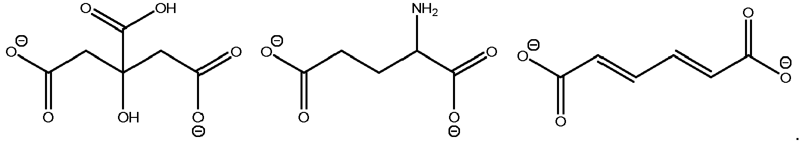

Thus according to the above definition, a substituent such as a C1 to C3 alkyl is not included in the carbon atoms count of the C₄ to C₁₂ backbone. Also, as in the examples shown above, when a substituent is COOH, it does not take part in the helical chain of *cis*-µ₂-OH-connected corner-sharing MO₄(OH)₂ (when M^{a+} a = 3+) octahedra or MO₄(O)₂ (when M^{a+} a ≥ 4+) *cis*-µ₂-O bridging mode.

Advantageously, the organic dicarboxylate linkers may be chosen from succinate, malate, tartarate, glutarate, glutamate, citrate, adipate, fumarate, glutaconate, mesaconate, hexenedioate, hydromuconate, 2-amino-muconate, muconate, traumatate, 1,4-phenylene diacetate, 1,4-henylenediacrylate, preferably muconate, hydromuconate, 2-amino-muconate, hexendioate, 1,4-phenylene diacetate and 1,4-phenylenediacrylate.

Advantageously, the organic dicarboxylate linkers may not comprise any carbon-carbon triple bond (alkynes). Preferably, the dicarboxylate linker may not be acetylenedicarboxyliate.

Advantageously, the porous MOF according to the invention may be chosen from the MOFs of formula {[Al(OH)(muc)]·xSolvent}_{y} in which Solvent is an organic or inorganic solvent, preferably chosen from water, alcohol (e.g., methanol, ethanol, benzylalcohol), acid (e.g., acetic acid or formic acid), dimethylformamide and dimethylsulfoxide, and x is from 0 to 15 and y ≥ 5.

On another aspect, the invention relates to a process of synthesis of the porous MOFs according to the invention.

The process of synthesis of the porous MOF according to the invention may comprise a step of heating, in a solvent, under reflux condition:
- a mixture of a metal precursor, the metal M being chosen from Al, Fe, Cr, Sc, V, Ga, In, Ti and mixtures thereof, and
- an organic dicarboxylic acid chosen from dicarboxylic aliphatic acids formed by a C₄ to C₁₂, saturated or unstaturated, linear hydrocarbon chain, optionally interrupted by a 5 or 6-membered aryl or heteroaryl moiety, and optionally bearing one or more substituents selected from a halo group, - OH, -NH₂, a C₁ to C₃ alkyl, a C₁ to C₃ alkoxy, -CF₃, -SH, -COOH and - CHR-NH₂ in which R is a C₁ to C₃ alkyl.

Advantageously, the step of heating, in a solvent, under reflux condition may last from 3 to 9 hours.

Advantageously, the metal precursors in the process are precursors to the metallic centres of the MOF according to the invention. The metal precursor may be chosen from the precursors in which the metal M is chosen from Al, Fe, Cr, Sc, V, Ga, In, Ti and mixtures thereof. The metal precursor may alternatively be chosen from the precursors in which the metal M is chosen from Al, Fe, Cr, Sc, V, Ga, Ti and mixtures thereof. Preferably, the metal precursor is chosen from the precursors in which the metal M is chosen from Fe, Al and mixtures thereof. The metal precursor may be chosen from sulfates, acetates, halides (e.g., chlorides), nitrates, metal hydroxides, metal oxides and mixed metal oxides (e.g., sodium aluminate).

Advantageously, the organic dicarboxylic acids in the process are precursors to the organic dicarboxylate linkers of the MOF according to the invention.

Advantageously, the organic dicarboxylic acids may be chosen from the acids of formula II: 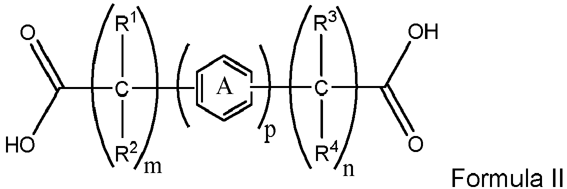 wherein,
- m is an integer from 1 to 5,
- n is an integer from 1 to 5,
- p is 0 or 1, 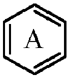 represents a 5 or 6-membered aryl or heteroaryl moiety,
- R¹, R², R³ and R⁴, each independently represents H, a halo group (e.g. F, Br, Cl or I), -OH, -NH₂, a C₁ to C₃ alkyl (e.g., methyl or ethyl), a C₁ to C₃ alkoxy (e.g., methoxy or ethoxy), -CF₃, -SH, -COOH or -CHR-NH₂ in which R is a C₁ to C₃ alkyl, or represent a bond when two adjacent carbon atoms are linked by a double C=C bond (e.g., when the dicarboxylate acid is mucconic acid).

Advantageously, the dicarboxylic acids may be chosen from succinic acid, malic acid, tartaric acid, glutaric acid, glutamic acid, citric acid, adipic acid, fumaric acid, glutaconic acid, mesaconic acid, hexenedioic acid, hydromuconic acid, 2-amino-muconic acid, muconic acid, traumatic acid, 1,4-phenylenediacetic acid, 1,4-phenylenediacrylic acid.

Advantageously, the dicarboxylic acids may not comprise any carbon-carbon triple bond (alkynes). Preferably, the dicarboxylic acid may not be acetylenedicarboxylic acid.

Advantageously, the solvent may be chosen from water or a mixture of water and an organic solvent, the organic solvent being preferably chosen from ethanol, benzylalcohol, acetic acid or formic acid, dimethylsulfoxide, methanol, dimethylformamide, and mixtures thereof.

Advantageously, the process according to the invention further comprises the steps of:
- cooling at room temperature (e.g. 15-25°C),
- collecting the solid product by centrifugation or filtration and
- washing with an organic solvent, preferably chosen from ethanol and dimethylsulfoxide, and with water.

According to the present invention, the porous MOF is preferably under a form allowing a large exchange surface between the MOF and the environment where the gas or vapor has to be captured by adsorption. The MOF may for example be in the form of a powder, a granule, a pellet, an extrudate, a monolith, a film, a composite embedded in the form of a foam material, a polymer or a fiber, coated or grown on a surface of a polymer material, of a paper sheet, of a fiber or of a metal. For example, document WO2009/123484 [55] published on October 2009 discloses a useful process for producing polyurethane foam filter material with adsorption capabilities that can be used to support the MOF to carry out the present invention. Other examples are the electropining of polymer containing MOF particles disclosed in documents M. Rose et al. Adv. Eng. Mater. 2011, 13, 356-360 **[56],** R. Ostermann at al. Chem. Commun. 2011, 47, 442-444 **[57],** J. Ren et al. Int. J. Hydrogen Energy 2015, 40, 9382-9387 **[58]** and M.R. Khan et al. J. Mater. Eng. Perform. 2016, 25, 1276-1283 **[59],** that give final composite fiber materials with supported MOF that simplify the application of MOF for the adsorption of volatile organic compounds. Other examples can include the use of MOFs in different shapes as, for example, in the form of granules as previously disclosed in the literature, Valekar et al., RSC Adv, 2017 **[60],** or pellets, Q. Ren, et al.," Chem. Eng. J., , 2015 **[61],** or by coating specific supports, as disclosed by Gkaniatsou et al., Nano Energy, 2020 **[62].**

According to the present invention, the MOF material or MOF under the form as described in previous paragraph may be comprised in a device. The invention thus further relates to a device chosen from air dehumidifiers or purifiers, sensors, catalysts, adsorption columns, filters, respiration masks, adsorption towers, hygienic protection products, wipes or diapers comprising a MOF according to the invention or a MOF as described in the previous paragraph.

The present invention allows to strongly increase water sorption and thus the new MOFs according to the invention may be advantageously used in the following application air water harvesting, chillers and coolers, or water purification.

The following experiments and results confirms the benefits of the present invention, over the prior art solutions.

The following representative examples and figures are intended to help illustrate the invention, and are not intended to, nor should they be constructed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, examplification and guidance that can be adapted to the practice of this invention in its various embodiments and the equivalents thereof. MOFs with different synthesis process have been prepared and their water sorption properties have been compared. In particular MIP-211 (invention) is compared to MIL-53 (comparative example) and it happens that the steep step of water sorption has been shifted to relatively lower relative pressures (ca. 0.29 versus ca. 0.55 at 25 °C, respectively).

### Brief description of the drawings

Figure 1 represents (Top) Helical Al-O chain in MIP-211(Al) made of cis-connected corner-shared AlO₆ octahedra bridged with µ₂-OP (H-atoms are not shown). (Down) Rod-like Al-O chain in MIL-53(Al)-muc made of trans-connected corner-shared AlO₆ octahedra bridged with µ₂-OH (H-atoms are not shown).
Figure 2 represents the projection along the [001] direction disclosing the one-dimensional channels with square-shaped cross-section in MIP-211(Al).
Figure 3 represents the comparative experimental and simulated powder X-ray diffraction patterns of MIP-211(Al) ((a) simulated and (b) experimental) and MIL-53(Al)-muc ((c) simulated and (d) experimental). Experimental pattern were measured under Cu-Ka radiation (λ = 1.5418 Å).
Figure 4 represents the nitrogen sorption isotherms at 77 K of (a) MIP-211(Al) and (b) MIL-53(Al)-muc. Adsorption and desorption branches are represented by full and empty symbols, respectively.
Figure 5 represents the water sorption isotherms of (a) MIP-211 (Al) and (b) MIL-53(Al)-muc measured at 25 °C.

### Examples

According to the present invention, the usable MOFs materials and their preparation can be understood further by the examples that illustrate some of the processes by which these materials are prepared or used. It will be appreciated, however, that these examples should not be construed to limit the invention. Variations of the invention, now known or further developed, are considered to fall within the scope of the present invention as described herein and as hereinafter claimed.

### Example 1: Materials synthesis

**MIP-211(AI):** 2.176 g (3.26 mmol) of Al₂(SO₄)₃·18H₂O and 0.464 g (3.26 mmol) of t,t-muconic acid (H₂-muc) were introduced in a solvent mixture made of 15 mL water and 5 mL of N,N-dimethylformamide (DMF). The suspension was heated 6 h while stirring under reflux conditions in a 100 mL round-bottom flask. After cooling to room temperature, the solid product was collected by centrifugation and washed thrice with DMF (10 mL) and thrice with water (10 mL). The product was dried in air after it was activated by heating at 120 °C under a dynamic vacuum for 16 h. 520 mg of material was obtained (92% yield based on H2-muc).

**Alternate green synthesis MIP-211(AI):** 5.4 g (41 mmol) of Al(OH)₃·3H₂O and 5.8 g (41 mmol) of *t*,*t*-muconic acid were introduced in 500 mL of water and heated 6 h while stirring under reflux conditions in a 1 L round-bottom flask. After cooling to room temperature, the solid product was collected by centrifugation and washed thrice with DMSO (200 mL) and thrice with water (200 mL). 6.8 g of material was obtained (90% yield based on H₂-muc).

**MIL-53(AI)-muc (comparative example):** 1.2 g (3.2 mmol) of Al(NO₃)₃·9H₂O and 0.5 g (3.52 mmol) of t,t-muconic acid were dissolved in a solvent mixture made of 11.2 mL of water and 3.8 mL DMF. The mixture was sealed in a Teflon-lined autoclave and heated for 6 h at 120 °C in an oven. Once the reactor was cooled down to room temperature, the product was separated and washed as described above. 450 mg of material was obtained (69% yield based on H₂-muc).

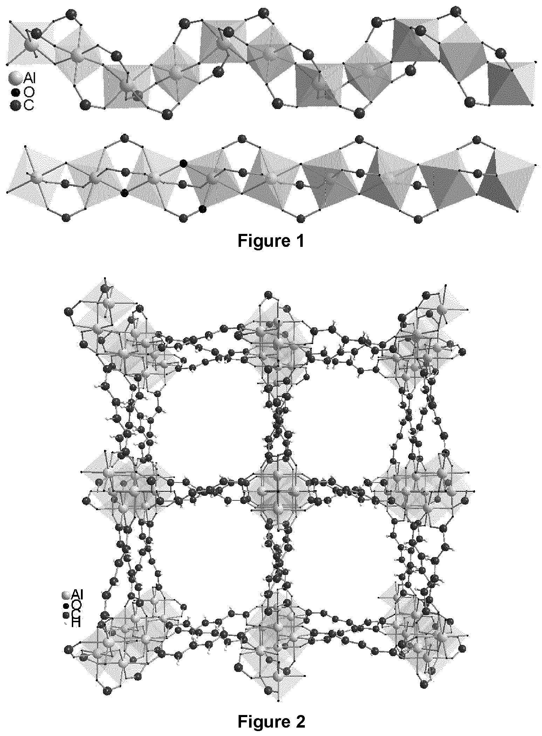

The crystalline structure of MIP-211 shown in Figures 1 and 2 was determined from high-resolution powder X-ray diffraction (HR-PXRD) data using the direct space method in FOX, and then refined by the Rietveld method. HR-PXRD data for crystal structure determination were collected with the samples sealed in 0.7 mm glass capillaries using PANalytical Empyrean diffractometer (CuKα1 radiation with Ge [1 1 1] monochromator, λ = 1.540598 Å) equipped with a PIXcel1D detector.

The experimental PXRD patterns shown in Figure 2 were collected using a high-throughput Bruker D8 Advance diffractometer working on transmission mode and fitted with a focusing Göbel mirror. The X-ray source was Cu-Kα radiation (λ = 1.5418 Å).

### Example 2: results and discussion

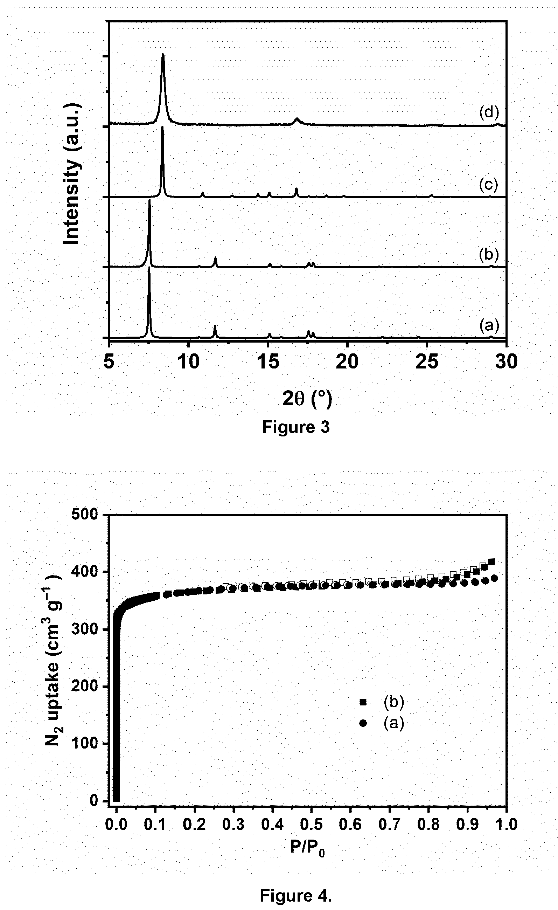

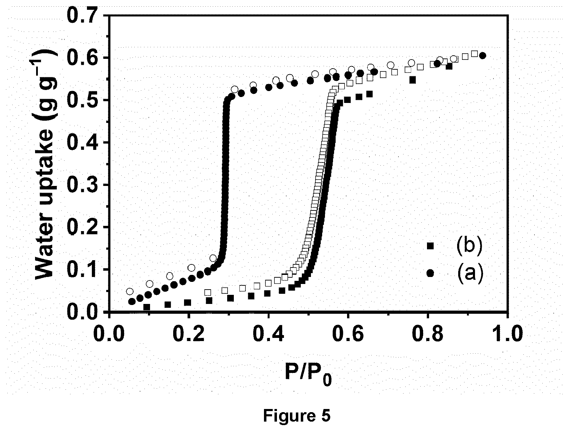

Nitrogen sorption data at 77K shown in Figure 4 were collected on a Micromeritics Tristar instrument using a LN2 bath to control the temperature. The H₂O isotherms at 298K shown in Figure 5 were recorded on a Micromeritics Triflex instrument. In all the cases the measurements were recorded using ultra-high purity gases (≥4.8 grade). Prior to the adsorption measurement, the samples were degassed at 200°C for 8 hours. The degassing was done in one step using a Micromeritics SmartVacPrep degas unit: evacuation at 200°C on the degas port (P=10⁻⁶ mbar), at which point the outgas rate was ≤ 2 µbar/min.

It has been demonstrated in the above examples, the cis*-µ₂*-OH-connectivity of the MOF according to the invention results indeed in drastic increase of the hydrophilicity compared to that of the MOF with the trans-µ-OH-connectivity. The new polymorphism, therefore, induces a strong change in the adsorption properties, and hence in the hydrophilicity of M-MOFs and the relative pressure position of the step of water sorption isotherm. In the case of the newly discovered hydrothermally stable MOFs according to the invention, and demonstrated through the example MIP-211, their water sorption profile and uptake capacity surpass most of the benchmark materials investigated for water sorption applications while exhibiting a very low temperature of regeneration.

### LIST OF REFERENCES

[1] Y. I. Aristov, Appl. Therm. Eng. 2013, 50, 1610.
[2] A. LaPotin, H. Kim, S. R. Rao, E. N. Wang, Acc. Chem. Res. 2019, 52, 1588.
[3] S. K. Henninger, H. A. Habib, C. JaniakJ. Am. Chem. Soc. 2009, 131, 2776.
[4] F. Jeremias, D. Fröhlich, C. Janiak, S. K. Henninger, New J. Chem. 2014, 38, 1846.
[5] Y. I. Aristov, Fut. Cit. & Env. 2015, 1, 10.
[6] M. J. Kalmutzki, C. S. Diercks, O. M. Yaghi, Adv. Mater. 2018, 1704304.
[7] W. Xu, O. M. Yaghi, ACS Cent. Sci. 2020, 6, 1348.
[8] J. Lord, A. Thomas, N. Treat, M. Forkin, R. Bain, P. Dulac, C. H. Behroozi, T. Mamutov, J. Fongheiser, N. Kobilansky, S. Washburn, C. Truesdell, C. Lee, P. H. Schmaelzle, Nature 2021, 598, 611.
[9] H. Furukawa, F. Gándara, Y.-B. Zhang, J. Jiang, W. L. Queen, M. R. Hudson, O. M. Yaghi, J. Am. Chem. Soc. 2014, 136, 4369.
[10] N.X. Zhu, Z.-W. Wei, C.-X. Chen, X.-H. Xiong, Y.-Y. Xion, Z. Zeng, W. Wang, J.-J. Jiang, Y.-N. Fan, C.-Y. Xion, Z. Zeng, W. Wang, J.-J. Jiang, Y.-N. Fan, C.-Y. Su, Angew. Chem. Int. 2022, 61, e202112097.
[11] H. Lu, W. Shi, Y. Guo, W. Guan, C. Lei, G. Yu, Adv. Mater. 2022, 34, 2110079.
[12] S.-I. Kim, T.-U. Yoon, M.-B. Kim, S.-J. Lee, Y.K. Hwang, J.-S. Chang, H.-J. Kim, H.-N. Lee, U.-H. Lee, Y.-S. Bae, Chem. Eng. J. 2016, 286, 467.
[13] H. Kim, S. Yang, S. R. Rao, S. Narayanan, E. A. Kapustin, H. Furukawa, A. S. Umans, O. M. Yaghi, E. N. Wang, Science 2017, 356, 430*.*
[14] M. F. de Lange, K. J. F. M. Verouden, T. J. H. Vlugt, J. Gascon, F. KapteijnChem. Rev. 2015, 115, 12205.
[15] S. Cui, M. Qin, A. Marandi, V. Steggles, S. Wang, X. Feng, F. Nouar, C. Serre, Sci. Rep. 2018, 8, 15284.
[16] H. Furukawa, K. E. Cordova, M. O'Keeffe and O. M. Yaghi, Science 2013, 341, 1230444.
[17] C. Janiak and J. K. Vieth, MOFs, New J. Chem. 2010, 34, 2366.
[18] S. T. Meek, J. A. Greathouse, M. D. Allendorf, Adv. Mater. 2011, 23 , 249.
[19] A. Cadiau, J. S. Lee, D. D. Borges, P. Fabry, T. Devic, M. T. Wharmby, C. Martineau, D. Foucher, F. Taulelle, C.-H. Jun, Y. K. Hwang, N. Stock, M. F. De Lange, F. Kapteijn, J. Gascon, G. Maurin, J.-S. Chang, C. Serre, Adv. Mater. 2015, 27, 4775.
[20] K. H. Cho, P. G. M. Mileo, J. S. Lee, U-H. Lee, J. Park, S. J. Sho, S. K. Chitale, G. Maurin, J.-S. Chang, ACS Appl. Mater. Interfaces 2021, 13, 1723.
[21] J. Canivet, J. Bonnefoy, C. Daniel, A. Legrand, B. Coasne, D. FarrussengNew J. Chem. 2014, 38, 3102.
[22] G. Mouchaham, F. S. Cui, F. Nouar, V. Pimenta, J.-S. Chang, C. Serre, Trends Chem. 2020, 2, 990.
[23] N. Zhu, M. J. Lennox, T. Düren, W. Schmitt, Chem. Comm. 2014, 50, 4207.
[24] J.-P. Zhang, X.-Chun Huang, X.-Ming Chen, Chem. Soc. Rev. 2009, 38, 2385.
[25] D. Aulakh, J. R. Varghese, M. Wriedt, Inorg. Chem. 2015, 17, 8679.
[26] Y. Lo, C. H. Lam, C.-W. Chang, A.-C. Yang, D.-Y. Kang, RSC Adv. 2016, 6, 89148.
[27] Z.-J. Li, Y. Lu, Z. Zhang, H. Lu, Y. Li, N. Zhang, X.-L. Du, X. Guo, Z.-H. Zhang, Y. Qian, M.-Y. He, Chem. Eur. J. 2021, 27, 17586.
[28] C. Avendano, Z. Zhang, A. Ota, H. Zhao, K. R. Dunbar, Angew. Chem. Int. Ed. 2011, 50, 6543.
[29] N. S. Bobbitt, A. S. Rosen, R. Q. Snurr, Fluid Ph. Equilibria 2020, 519, 112642.
[30] M. Gaab, : Trukhan, S. Maurer, R. Gummaraju, U. Müller, Microporous Mesoporous Mater. 2012, 157, 131.
[31] T. Wu, N. Prasetya, K. Li, J. Memb. Sci. 2020, 615, 118493.
[30] F. Jeremias, D. Fröhlich, C. Janiak and S. K. Henninger, RSC Adv. 2014, 4, 24073.
[33] H. Kummer, F. Jeremias, A. Warlo, G. Füldner, D. Fröhlich, C. Janiak, R. Gläser, S. K. Henninger, Ind. Eng. Chem. Res. 2017, 56, 8393.
[34] D. Lenzen, P. Bendix, H. Reinsch, D. Fröhlich, H. Kummer, M. Möllers, P. P. C. Hügenell, R. Gläser, S. Henninger, N. Stock, Adv. Mater. 2018, 30, 1705869.
[35] D. Fröhlich, S. K. Henninger, C. Janiak, Dalton Trans. 2014, 43, 15300.
[36] D. Fröhlich, E. Pantatosaki, P. D. Kolokathis, K. Markey, H. Reinsch, M. Baumgartner, M. A. Van der Veen, D. E. De Vos, N. Stock, G. K. Papadopoulos, S. K. Henninger, C. Janiak, J. Mater. Chem. A 2016, 4, 11859.
[37] N. Tannert, S.-J. Ernst, C. Jansen, H.-J. Bart, S. K. Henninger, C. Janiak, J. Mater. Chem. A, 2018, 6, 17706.
[38] D. Lenzen, J. Zhao, S.-J. Ernst, M. Wahiduzzaman, A. K. Inge, D. Fröhlich, H. Xu , H.-J. Bart, C. Janiak, S. Henninger, G. Maurin, X. Zou, N. Stock, Nat. Commun. 2019, 10, 3025.
[39] N. Hanikel, M. S. Prévot, F. Fathieh, E. A. Kapustin, H. Lyu, H. Wang, N. J. Diercks, T. G. Glover, O. M. Yaghi, ACS Cent. Sci. 2019, 5, 1699.
[40] A. Permyakova, O. Skrylnyk, E. Courbon, M. Affram, S. Wang, U-H. Lee, A. H. Valekar, F. Nouar, G. Mouchaham, T. Devic, G. De Weireld, J.-S. Chang, N. Steunou, M. Frère, C. Serre, ChemSusChem 2017, 10, 1419.
[41] E. Gkaniatsou, C. Chen, F. S. Cui, X. Zhu, P. Sapin, F. Nouar, C. Boissière, C. N. Markides, J. Hensen, C. Serre, Cell Rep. Phys. Sci. 2022, 3, 100730.
[42] M. P. Silva, A. M. Ribeiro, C. G. Silva, I. B. R. Nogueira, K.-H. Cho, U.-H. Lee, J. L. Loureiro, J.-S. Chang, A. E. Rodrigues, A. Ferreira, Adsorption 2021, 27, 213.
[43] K. H. Cho, D. D. Borges, U-H. Lee, J. S. Lee, J. W. Yoon, S. J. Cho, J. Park, W. Lombardo, D. Moon, A. Sapienza, G. Maurin, J.-S. Chang, Nat. Commun. 2020, 11, 5112.
[44] K. H. Cho, D. D. Borges, J. S. Lee, J. Park, S. J. Cho, D. Jo, U-H. Lee, G. Maurin, J.-S. Chang, ACS Sustainable Chem. Eng. 2022, 10, 7010.
[45] D. Shade, B. Marszalek, K. S. Walton, Adsorption 2021, 27, 227.
[46] F. Milange, C. Serre, G. Ferey, Chem. Commun. 2002, 822.
[47] T. Loiseau, C. Serre, C. Huguenard, G. Fink, F. Taulelle, M. Henry, T. Bataille, G. Férey, Chem. Eur. J. 2004, 10, 1373.
[48] H. Reinsch, M. A. Van der Veen, B. Gil, B. Marszalek, T. Verbiest, D. De Vos, N. Stock, Chem. Mater. 2013, 25, 17.
[49] H. Reinsch, S. Waitschat, N. Stock, Dalton Trans. 2013, 42, 4840.
[50] N. Hanikel, x. Pei, S. Chheda, H. Lyu, W. Jeong, J. Sauer, L. Gagliardi, O. M. Yaghi, Science 2021, 374, 454-459.
[51] T. Rabe, E. S. Grape, H. Rohr, H. Reinsch, S. Wöhlbrandt, A. Lieb, A. K. Inge, N. Stock, Inorg. Chem. 2021, 60, 8861.
[52] D. Woschko, S. Yilmaz, C. Jansen, A. Spieß, R. Oestreich, T. J. Matemb Ma Ntep, C. Janiak, Dalton Trans., 2023, 52, 977. (DOI: 10.1039/d2dt03719j)
[53] T. J. Matemb Ma Ntep, H. Reinsch, P. P. C. Hügenell, S.-J. Ernst, E. Hastürk, C. Janiak, J. Mater. Chem. A 2019, 7, 24973.
[54] E. Alvarez, N. Guillou, C. Martineau, B. Bueken, B. Van de Voorde, C. Le Guillouzer, P. Fabry, F. Nouar, F. Taulelle, D. de Vos, J.-S. Chang, K. H. Cho, N. Ramsahye, T. Devic, M. Daturi, G. Maurin, C. Serre, Angew. Chem. 2015, 127, 3735.
[55] WO2009/123484.
[56] M. Rose et al., Adv. Eng. Mater., 2011, 13, 356-360.
[57] R. Ostermann at al., Chem. Commun., 2011, 47, 442-444.
[58] J. Ren et al., Int. J. Hydrogen Energy, 2015, 40, 9382-9387.
[59] M.R. Khan et al., J. Mater. Eng. Perform., 2016, 25, 1276-1283.
[60] Valekar et al., RSC Adv, 2017**.**
[61] Q. Ren, et al., Chem. Eng. J., , 2015**.**
[62] Gkaniatsou et al., Nano Energy, 2020**.**

## Claims

1. A porous Metal-Organic Framework material built up from metal (III or IV) octahedra linked thoughout µ₂-OH and/or µ₂-O bridges and interconnected by organic dicarboxylate linkers, wherein,
- the metallic centres are chosen from Al, Fe, Cr, Sc, V, Ga, In, Ti and mixtures thereof,
- the organic dicarboxylate linkers are chosen from dicarboxylate aliphatic linkers formed by a C₄ to C₁₂, saturated or unstaturated, linear hydrocarbon chain, optionally interrupted by a 5 or 6-membered aryl or heteroaryl moiety, and optionally bearing one or more substituents selected from a halo group, -OH, -NH₂, a C₁ to C₃ alkyl, a C₁ to C₃ alkoxy, -CF₃, -SH, - COOH and -CHR-NH₂ in which R is a C₁ to C₃ alkyl, and
- the metallic centres and the carboxylate groups of the organic dicarboxylate linkers form together a helical chain of *cis*-µ₂-OH-connected corner-sharing MO₄(OH)₂ octahedra, when M^{a+} a = 3+, or MO₄(O)₂ *cis*-µ₂-O bridging mode, when M^{a+} a ≥ 4+.

2. The porous MOF according to claim 1, wherein the organic dicarboxylate linkers are chosen from the linkers of formula I: 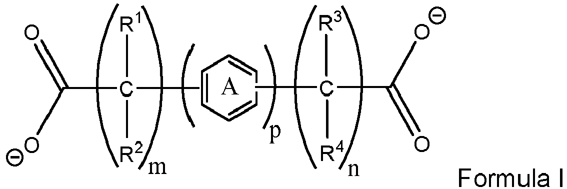 wherein,
- m is an integer from 1 to 5,
- n is an integer from 1 to 5,
- p is 0 or 1, 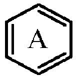 represents a 5 or 6-membered aryl or heteroaryl moiety,
- R¹, R², R³ and R⁴, each independently represent H, a halo group, -OH, - NH₂, a C₁ to C₃ alkyl, a C₁ to C₃ alkoxy, -CF₃, -SH, -COOH, -CHR-NH₂ in which R is a C₁ to C₃ alkyl, or represent a bond when two adjacent carbon atoms are linked by a double C=C bond.

3. The porous MOF according to claim 1 or 2, wherein the polycarboxylate linkers are chosen from succinate, malate, tartarate, glutarate, glutamate, citrate, adipate, fumarate, glutaconate, mesaconate, hexenedioate, hydromuconate, 2-amino-muconate, muconate, traumatate, 1,4-phenylenediacetate, 1,4-phenylenediacrylate.

4. The porous MOF according to any of preceding claims of formula {[Al(OH)(muc)]·xSolvent}_{y} in which Solvent is an organic or inorganic solvent, preferably chosen from water, alcohol, acid, dimethylformamide and dimethylsulfoxide, and x is from 0 to 15 and y ≥ 5.

5. A process of synthesis of the porous MOF according to any of preceding claims comprising a step of heating, in a solvent, under reflux condition a mixture of a metal precursor, the metal M being chosen from Al, Fe, Cr, Sc, V, Ga, In, Ti and mixtures thereof, and an organic dicarboxylic acid chosen from dicarboxylic aliphatic acids formed by a C₄ to C₁₂, saturated or unstaturated, linear hydrocarbon chain, optionally interrupted by a 5 or 6-membered aryl or heteroaryl moiety, and optionally bearing one or more substituents selected from a halo group, -OH, -NH₂, a C₁ to C₃ alkyl, a C₁ to C₃ alkoxy, -CF₃, -SH, -COOH and -CHR-NH₂ in which R is a C₁ to C₃ alkyl.

6. The process according to claim 5, wherein the organic carboxylic acids are chosen from the acids of formula II: 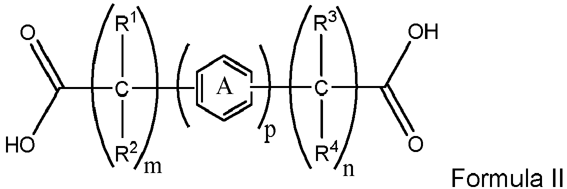 wherein,
- m is an integer from 1 to 5,
- n is an integer from 1 to 5,
- p is 0 or 1, 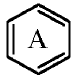 represents a 5 or 6-membered aryl or heteroaryl moiety,
- R¹, R², R³ and R⁴, each independently represent H, a halo group, -OH, - NH₂, a C₁ to C₃ alkyl, a C₁ to C₃ alkoxy, -CF₃, -SH, -COOH, -CHR-NH₂ in which R is a C₁ to C₃ alkyl, or represent a bond when two adjacent carbon atoms are linked by a double C=C bond.

7. The process according to claim 5 or 6, wherein the dicarboxylic acids are chosen from succinic acid, malic acid, tartaric acid, glutaric acid, glutamic acid, citric acid, adipic acid, fumaric acid, glutaconic acid, mesaconic acid, hexenedioic acid, hydromuconic acid, 2-amino-muconic acid, muconic acid, traumatic acid, 1,4-phenylenediacetic acid, 1,4-phenylenediacrylic acid.

8. The process according to any of claims 5 to 7, wherein the solvent is chosen from water or a mixture of water and an organic solvent, the organic solvent being preferably chosen from ethanol, benzylalcohol, acetic acid or formic acid, dimethylformamide, dimethylsulfoxide, methanol, and mixtures thereof.

9. The process according to any of claims 5 to 8, further comprising the steps of:
- cooling at room temperature (e.g., 15-25°C),
- collecting the solid product by centrifugation or filtration and
- washing with an organic solvent, preferably chosen from ethanol and dimethylsulfoxide, and with water.

10. A use of at least one porous Metal-Organic Framework (MOF) material according to any of claims 1 to 4 in adsorption-driven air conditioning and water harvesting from the air, adsorption of water, gases or vapors and thermally driven water-sorption-based cooling systems, such as water harvesting or production, gas and/or vapor capture and separation, such as CO₂, hydrocarbons, BTX and VOCs, catalysis, sensing.

11. A MOF material according to any one of preceding claims 1 to 4, wherein the MOF material is under the form of a powder, a granule, a pellet, an extrudate, a monolith, a film, a composite embedded in the form of a foam material, a polymer or a fiber, coated or gorwn on a surface of a polymer material, of a paper sheet, of a fiber or of a metal.

12. A device chosen from chosen from air dehumidifiers, cooling, heating or purifiers, sensors, catalysts, adsorption columns, filters, respiration masks, adsorption towers, hygienic protection products, wipes or diapers, comprising a MOF material according to claim 1 to 4, or a MOF material under the form as described in preceding claim.
